# EUROPÄISCHE PATENTANMELDUNG

(11) **EP 4 036 433 A1**
(43) Veröffentlichungstag der Anmeldung: **03.08.2022**
(21) Anmeldenummer: 21214216.0
(22) Anmeldetag: 14.12.2021
(51) Int. Cl.: F16F 1/373, F16F 15/08, F16B 21/07, F16B 21/08

(54) **ENTKOPPLUNGSELEMENT**

(30) Priorität: 01.02.2021 DE 102021102205
(71) Anmelder: Audi AG, 85057 Ingolstadt (DE)
(72) Erfinder: Nübling, Philipp, 85051 Ingolstadt (DE)

(57) **Zusammenfassung**

Die vorliegende Erfindung betrifft ein Entkopplungselement für mit einer Karosseriestruktur eines Kraftfahrzeugs verbundene Anbauteile, ein Verfahren zur Herstellung des Entkopplungselements und dessen Montage.

## Beschreibung

Die vorliegende Erfindung betrifft ein Entkopplungselement für mit einer Karosseriestruktur eines Kraftfahrzeugs verbundene Anbauteile, ein Verfahren zur Herstellung des Entkopplungselements und dessen Montage.

Zur Reduzierung der während des Betriebs einer Brennkraftmaschine entstehenden Geräusche ist es wichtig, dass an den Motorblock angeflanschte Anbauteile vom Motorblock schwingungsmäßig abgekoppelt sind. Hierzu gibt es Entkopplungselemente zwischen dem Schraubenkopf einer Befestigungsschraube und dem von der Befestigungsschraube gehaltenen Bauteil. Mittels eines Entkopplungselementes können auch weitere, insbesondere kleinere Anbauteile eines Fahrzeugs an dem Fahrzeug befestigt werden, beispielsweise eine Pumpe oder Wärmepumpe einer E-Maschine oder ein Ventil an einem anderem Bauteil eines Fahrzeugs. Mittels dieser Entkopplung zwischen Anbauteil, beispielsweise dem Ventil, und einer weiteren Fahrzeugkomponente werden somit beim Betrieb keine störenden Geräusche in den Innenraum abgegeben.

Die Montage eines herkömmlichen Entkopplungselements benötigt zusätzliche Fertigungszeit, da die Mutter oder Schraube zuerst gesetzt und anschließend angezogen werden muss. Weiterhin wird ein zusätzliches Werkzeug (Schraubenschlüssel bzw. Drehmomentschlüssel) für den Montagevorgang benötigt.

Die DE 10 2019 113 663 A1 betrifft einen Abstandhalter für eine Befestigungsanordnung zum schwingungsgedämpften Befestigen eines Montageteils an einem Trägerteil. Der Abstandhalter weist einen Grundkörper auf mit einem ersten Flanschbereich und einem in Längsrichtung des Grundkörpers gesehen gegenüberliegenden zweiten Flanschbereich sowie mit einem Durchgang, in welchem ein mit dem Trägerteil verbundener oder zu verbindender Befestiger zumindest bereichsweise aufnehmbar ist. Der Grundkörper ist mindestens zweiteilig ausgeführt und weist ein erstes Körperteil und mindestens ein weiteres, zweites Körperteil auf, wobei die Körperteile zum Ausbilden des Grundkörpers miteinander lösbar verbindbar sind, und wobei im verbundenen Zustand der Körperteile zwischen dem ersten und zweiten Flanschbereich ein Spaltbereich vorgesehen ist, von welchem die Umrandung eines in dem Montageteil ausgebildeten Befestigungsloches zumindest bereichsweise aufnehmbar ist.

Die DE 10 2009 017 806 A1 offenbart ein Befestigungselement zur Festlegung eines Bauteils an einem tragenden Teil. Das Befestigungselement weist ein an dem tragenden Teil festlegbares Verankerungselement auf. Des Weiteren ist ein radiales Ausgleichselement zum Ausgleich eines radialen Versatzes zwischen dem Bauteil und dem Verankerungselement vorgesehen. Schließlich verfügt das Befestigungselement noch über ein Halteelement zum Halten des Bauteils.

Aus der DE 10 2016 113 797 A1 ist eine Befestigungseinheit zur fadenlosen Befestigung von Gewebe an Knochen bekannt, mit einem Ankerelement, das an einem Knochen fixierbar ist, einem Halteelement, das mit dem Ankerelement koppelbar ist, um einen Gewebeabschnitt am Knochen anzulagern, wobei das Ankerelement und das Halteelement miteinander verrastbar sind und zwischen sich einen Haltebereich ausbilden, in dem der Gewebeabschnitt aufnehmbar ist.

Die DE 10 2019 111 078 A1 betrifft eine Befestigungsanordnung mit Dämpfungswirkung, die aus zwei baugleichen Befestigungseinheiten mit jeweils einer zentralen ersten Durchgangsöffnung besteht. Jede Befestigungseinheit umfasst ein Montageelement und ein Dämpfungselement. Das Montageelement ist scheibenförmig mit einer zentralen zweiten Durchgangsöffnung ausgebildet und von einer ersten Seite jedes Montageelements erstreckt sich eine identische Raststruktur. Das Dämpfungselement ist scheibenförmig mit einer zentralen dritten Durchgangsöffnung ausgebildet und zumindest teilweise in der zentralen zweiten Durchgangsöffnung des Montageelements angeordnet. Aufgrund dieses Aufbaus sind die zwei Befestigungseinheiten über die einander zugewandten ersten Seiten mit der identischen Raststruktur der jeweiligen Montageelemente mit dazwischen angeordnetem erstem Bauteil aneinander befestigbar.

Die DE 10 2005 010 433 A1 betrifft ein Dämpfungslager zur schwingungs- und geräuschentkoppelten Befestigung eines Blechbauteils. Das Dämpfungslager besteht aus zwei aus elastomerem Werkstoff hergestellten Lagerteilen, die das Blechbauteil im Bereich einer Durchgangsöffnung halten und die von einem Befestigungsmittel durchsetzt sind. Das Dämpfungslager weist zwei baugleiche Lagerteile auf, die im Bereich zwischen Durchdringungsöffnung und radialer Abstützung entlang des Umfanges mindestens einen Zahn und eine mit der Anzahl der Zähne gleiche Anzahl am Umfang neben diesem Zahn oder diesen Zähnen angeordnete, zu dem Zahn gegenflächig kongruente Zahneingriffsmulden aufweisen.

Vor diesem Hintergrund hat sich die Erfindung die Aufgabe gestellt, ein Entkopplungselement für mit einer Karosseriestruktur eines Kraftfahrzeugs verbundene Anbauteile zur Verfügung zu stellen, das einfach herzustellen ist und mit geringem Bauteil- und Zeitaufwand montiert werden kann.

Die Aufgabe wird erfindungsgemäß gelöst durch ein Bauteil mit den Merkmalen des Anspruchs 1, ein Entkopplungselement mit den Merkmalen des Anspruchs 9 und ein Verfahren mit den Merkmalen des Anspruchs 10. Ausgestaltungen und Weiterbildungen der Erfindung ergeben sich aus den abhängigen Ansprüchen, der Beschreibung und der Abbildung.

Gegenstand der Erfindung ist ein Bauteil, welches dafür eingerichtet ist, mit einem zweiten identischen Bauteil zusammengefügt zu werden, um ein Entkopplungselement für ein mit einer Karosseriestruktur eines Kraftfahrzeugs verbundenes Anbauteil zu bilden. Eine Karosseriestruktur eines Kraftfahrzeugs kann erfindungsgemäß ein beliebiger Bereich in dem Fahrzeug sein, beispielweise ein Motorraum, ein Kofferraum oder ein anderer Bereich in dem Fahrzeug wie ein Bodenplattenbereich, ein Dachbereich, ein Seitenverkleidungsbereich, oder auch eine weitere Komponente, wie beispielsweise eine Technikmulde, zum Beispiel in Form eines Bereichs des Kofferraums. Ein Kofferraum kann dabei je nach Ausgestaltung des Fahrzeugs in Fahrtrichtung gesehen im vorderen oder hinteren Bereich des Fahrzeugs angeordnet sein.

Das erfindungsgemäße Bauteil umfasst eine Trägerstruktur aus einem Thermoplasten. Die Trägerstruktur besteht aus einem harten Material und stellt die Festigkeit des Bauteils zur Verfügung. In einer Ausführungsform ist der Thermoplast Polyamid (PA), Polyamid 6 (PA6) oder Polyamid 66 (PA66), wobei auch mit Glasfasern verstärktes PA, PA6 oder PA66 zum Einsatz kommen kann.

Die Trägerstruktur umfasst eine Basisplatte, die einen zentralen Durchbruch aufweist. In einer Ausführungsform ist die Basisplatte rund. In einer anderen Ausführungsform ist die Außenkontur der Basisplatte ein Polygon mit einer geraden Anzahl von Ecken, beispielsweise vier, sechs oder acht Ecken.

In einer Ausführungsform ist der zentrale Durchbruch eine kreisförmige Öffnung. In einer anderen Ausführungsform ist die Außenkontur des zentralen Durchbruchs polygonal mit mindestens drei Ecken, beispielsweise eine dreieckige, viereckige, fünfeckige, sechseckige oder achteckige Öffnung.

Die Basisplatte weist mindestens zwei auf einer zu ihrem Zentrum (und damit zum Zentrum des zentralen Durchbruchs) koaxialen Kreislinie auf ihrer Oberseite äquidistant zueinander angeordnete identisch geformte Zylinderwandsegmente und jeweils zwischen zwei Zylinderwandsegmenten angeordnete Aussparungen auf. Dabei ist die Länge des Kreisbogens zwischen zwei Zylinderwandsegmenten mindestens so groß wie die Länge einer Oberkante eines Zylinderwandsegments. In einer Ausführungsform ist die Länge des Kreisbogens zwischen zwei Zylinderwandsegmenten genauso groß wie die Länge einer Oberkante eines Zylinderwandsegments.

Jedes der Zylinderwandsegmente weist auf seiner Oberkante eine Rastnase auf, welche dafür eingerichtet ist, in eine korrespondierende Aussparung der Basisplatte eines zweiten identischen Bauteils einzugreifen und die beiden Bauteile miteinander zu verrasten. Sind die Länge des Kreisbogens zwischen zwei Zylinderwandsegmenten und die Länge der Oberkante der Zylinderwandsegmente des Bauteils gleich groß, werden dabei die Lücken zwischen den Zylinderwandsegmenten beider Bauteile von den Zylinderwandsegmenten des jeweils anderen Bauteils ausgefüllt, so dass ein geschlossener Hohlzylinder ausgebildet wird. Ist die Länge des Kreisbogens zwischen zwei Zylinderwandsegmenten größer als die Länge der Oberkante der Zylinderwandsegmente, dann verbleiben nach dem Zusammenfügen Spalte zwischen den Zylinderwandsegmenten.

Die Zylinderwandsegmente sind identisch geformt und äquidistant zueinander angeordnet, so dass die Länge des Kreisbogens zwischen zwei Zylinderwandsegmenten mindestens so groß ist wie die Länge einer Oberkante eines Zylinderwandsegments. In einer Ausführungsform hat die Oberkante der Zylinderwandsegmente die gleiche Länge wie ihre Unterkante. In anderen Ausführungsformen ist die Länge der Oberkante der Zylinderwandsegmente kleiner als die Länge der Unterkante, d. h., die Zylinderwandsegmente verjüngen sich nach oben hin.

In einer Ausführungsform weist das erfindungsgemäße Bauteil zwei identische und äquidistant angeordnete Zylinderwandsegmente auf. In einer Ausführungsform ist das Bauteil spiegelsymmetrisch aufgebaut, wobei die Symmetrieebene durch die Hochachse (Z-Achse) des Bauteils verläuft.

In einer anderen Ausführungsform weist das erfindungsgemäße Bauteil mehr als zwei identische und äquidistant angeordnete Zylinderwandsegmente auf. In einer weiteren Ausführungsform weist das erfindungsgemäße Bauteil drei identische und äquidistant angeordnete Zylinderwandsegmente auf. In einer weiteren Ausführungsform weist das erfindungsgemäße Bauteil vier identische und äquidistant angeordnete Zylinderwandsegmente auf.

In einer Ausführungsform des erfindungsgemäßen Bauteils weist die Basisplatte am Rand des Durchbruchs angeordnete Zentrierelemente zwischen den äquidistant angeordneten Zylinderwandsegmenten auf.

Die dem zentralen Durchbruch zugewandte Seite jedes Zylinderwandsegments trägt ein Federelement. In einer Ausführungsform sind die Federelemente oberhalb der Ebene des Durchbruchs der Basisplatte angeordnet. In einer Ausführungsform sind die Federelemente Zungen, die parallel zur Ebene der Basisplatte verlaufen. In einer Ausführungsform weist die Trägerstruktur mindestens zwei äquidistant angeordnete Federelemente auf. In einer weiteren Ausführungsform weist die Trägerstruktur mehr als zwei Federelemente auf, beispielsweise drei oder vier Federelemente.

Die Federelemente sind dafür eingerichtet, bei Einbringen eines Gewindebolzens oder Grobgewindebolzens in den zentralen Durchbruch in Gewindeflanken des Bolzens einzugreifen. Dadurch lässt sich das Bauteil auf dem Bolzen fixieren und es ist bei der Montage des Bauteils bzw. des Entkopplungselements kein Schraubvorgang erforderlich. Das Entkopplungselement wird lediglich auf einen Gewindebolzen oder Grobgewindebolzen aufgesteckt. Das Verhaken in den Gewindeflanken erfolgt durch die federnden Elemente, welche radial im Inneren des Entkopplungselements angeordnet sind.

In einer Ausführungsform ist im Bereich der Federelemente die Breite des zentralen Durchbruchs mindestens so groß wie oder größer als die Breite der Federelemente. Dadurch können die Federelemente im Spritzgusswerkzeug besser entformt werden.

In einer Ausführungsform des erfindungsgemäßen Bauteils weist die Unterseite der Basisplatte Versteifungsrippen auf.

Das erfindungsgemäße Bauteil umfasst auch eine Entkopplungsstruktur aus einem Elastomeren, welche auf der Oberseite der Basisplatte der Trägerstruktur angeordnet ist. Die Entkopplungsstruktur besteht aus einem weichen elastischen Material und bewirkt eine Schwingungsentkopplung der Trägerstruktur und eine Dämpfung von Vibrationen und Körperschall. In einer Ausführungsform ist das Elastomer ein Ethylen-Propylen-Dien-Kautschuk (EPDM), ein thermoplastisches Elastomer (TPE) oder ein vernetztes thermoplastisches Elastomer auf Olefinbasis (TPV).

Die Entkopplungsstruktur umschließt die zu dem Zentrum der Basisplatte koaxiale Kreislinie. Sie ist rund um die Zylinderwandsegmente auf deren vom zentralen Durchbruch abgewandten Seite angeordnet.

In einer Ausführungsform weist die Entkopplungsstruktur Stützelemente auf, die eine von dem Durchbruch abgewandte Seite der Zylinderwandsegmente, also deren Rückseite, abstützen. In einer weiteren Ausführungsform weist die Entkopplungsstruktur auf ihrer Oberseite radial verlaufende Nasen auf. Dadurch ergibt sich ein wellenförmiges Profil bzw. ein Zickzackprofil der Oberfläche der Entkopplungsstruktur.

In einer Ausführungsform ist das erfindungsgemäße Bauteil durch ein 2K-Spritzgussverfahren hergestellt. Man benötigt daher zur Herstellung des erfindungsgemäßen Bauteils nur ein einziges Spritzgusswerkzeug. Entsprechende 2K-Spritzgussverfahren (2K injection molding) sind dem Fachmann im Prinzip bekannt.

Gegenstand der Erfindung ist auch ein zwei identische erfindungsgemäße Bauteile umfassendes Entkopplungselement.

Gegenstand der Erfindung ist auch ein Verfahren zur Schwingungsentkopplung eines Anbauteils von einer Karosseriestruktur eines Kraftfahrzeugs. Bei dem Verfahren werden zwei identische erfindungsgemäße Bauteile von gegenüberliegenden Seiten durch eine Aussparung eines Halters des Anbauteils gesteckt und unter Bildung eines Entkopplungselements miteinander verrastet. Dabei greifen die Rastnasen des ersten Bauteils in die korrespondierenden Aussparungen des zweiten Bauteils ein und die Rastnasen des zweiten Bauteils greifen in die korrespondierenden Aussparungen des ersten Bauteils ein. Anschließend wird das Entkopplungselement auf einen an einer Karosseriestruktur des Kraftfahrzeugs angebrachten Gewindebolzen aufgesteckt. Dadurch greifen Federelemente des Entkopplungselements in Gewindeflanken des Bolzens ein und fixieren das Entkopplungselement. Der Gewindebolzen kann erfindungsgemäß auch als Grobgewindebolzen ausgestaltet sein.

Dabei kann die Karosseriestruktur ein beliebiger Bereich am Fahrzeug sein, bspw. ein Motorraum, ein Kofferraum oder ein beliebiger anderer Bereich in dem Fahrzeug, wie ein Bodenplattenbereich, ein Dachbereich, ein Seitenverkleidungsbereich oder eine weitere Komponente, wie beispielsweise eine Technikmulde, zum Beispiel in Form eines Bereichs des Kofferraums.

Das zu entkoppelnde und zu befestigende Anbauteil ist eine im Fahrzeug befindliche Komponente, beispielsweise ein Ventil, eine elektrisch angetriebene Wasserpumpe, ein Sensor, ein Steuergerät, oder eine Rohrleitung.

Das Entkopplungselement muss bei der Montage lediglich über einen Gewinde- bzw. Grobgewindebolzen aufgesteckt werden, wobei sich die federnden Elemente aus Kunststoff im Inneren des Entkopplungselements in den Gewindeflanken des Bolzens verhaken. Dabei ist eine Verdrehsicherung nicht notwendig, da die Weichkomponente am Halter aufliegt und durch die Flächenpressung ein Reibmoment entwickelt, so dass sich das Element nicht von selbst (bspw. durch Schwingungsanregung während der Fahrt) lösen kann. Die beiden Hälften des Entkopplungselements werden zur Montage (und vor dem Aufstecken) jeweils von einer Seite des Halters ineinandergesteckt, wobei die Rastnasen der jeweiligen Hälfte in den Aussparungen am Boden der jeweils anderen Hälfte verrasten.

Durch das erfindungsgemäße Entkopplungselement werden gegenüber Entkopplungselementen des Standes der Technik pro Entkopplungselement je eine Distanzbuchse, eine Unterlegscheibe und eine Mutter oder Schraube eingespart. Die Montage eines Entkopplungselements wird vereinfacht und aufgrund der Kunststoffbauweise ergibt sich ein geringes Gewicht. Das erfindungsgemäße Entkopplungselement bietet eine Funktionsintegration von Hart- und Weichkomponente in einem einzigen Bauteil und verbessert die Standardisierung, da ein aus mehreren verschiedenen Einzelteilen aufgebautes Entkopplungselement durch zwei identische 2K-Bauteile gebildet wird. Beim Montagevorgang wird ein Aufschrauben einer Mutter oder Schraube ersetzt durch ein Aufstecken des Entkopplungselements, was zu einer Verkürzung der Fertigungszeit führt. Zudem entfällt ein Anziehen der Mutter bzw. Schraube mittels Drehmomentschlüssel. Diverse Kleinteile und Montagewerkzeuge können in der Montage eingespart werden. Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen weiter beschrieben. Es zeigt:
- Figur 1: eine schematische Darstellung einer Ausführungsform des erfindungsgemäßen Bauteils;
- Figur 2: eine Ansicht von unten einer Ausführungsform der Trägerstruktur des erfindungsgemäßen Bauteils;
- Figur 3: Arbeitsschritte (Montageschritte) des erfindungsgemäßen Verfahrens.

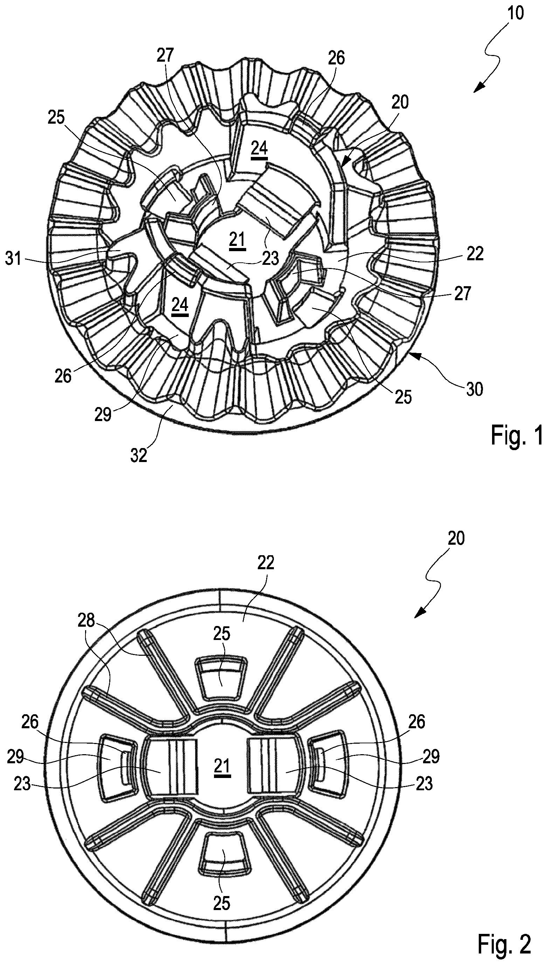

Figur 1 zeigt eine Ausführungsform des erfindungsgemäßen Bauteils 10. Das dargestellte Bauteil 10 kann mit einem zweiten identischen Bauteil 10 zusammengesteckt werden, um ein Entkopplungselement 100 zu bilden. Das Bauteil 10 ist in Zweikomponentenbauweise ausgeführt und umfasst eine Trägerstruktur 20 aus einem harten Thermoplasten, bspw. PA, PA6, PA66, etc., mit oder ohne Glasfaseranteil, und einer Entkopplungsstruktur 30 aus einem weichen elastischen Material, bspw. aus EPDM, TPE, oder TPV. Die beiden Komponenten 20, 30 haben unterschiedliche Funktionen. Die harte Komponente 20 fungiert als Trägerstruktur und stellt die Festigkeit des Bauteils zur Verfügung, die weiche Komponente 30 bewirkt eine Schwingungsentkopplung zwischen einem Halter 210 und der Trägerstruktur 20 und sorgt dabei für die Dämpfung von Vibrationen und Körperschall.

Die Trägerstruktur 20 umfasst eine Basisplatte 22 mit einem zentralen Durchbruch 21. In der dargestellten Ausführungsform ist die Basisplatte 22 rund und der zentrale Durchbruch 21 ist eine längliche Öffnung mit kreisförmigem Mittelteil. In einer anderen Ausführungsform ist die Außenkontur der Basisplatte 22 ein Polygon mit einer geraden Anzahl von Ecken, beispielsweise vier, sechs oder acht Ecken. Auch der zentrale Durchbruch 21 kann eine polygonale Kontur mit mindestens drei Ecken aufweisen, beispielsweise dreieckig, viereckig, fünfeckig, sechseckig oder achteckig sein.

Auf der Oberseite der Basisplatte 22 befinden sich auf einer zu dem Zentrum des Durchbruchs 21 koaxialen Kreislinie zwei Zylinderwandsegmente 24. In der dargestellten Ausführungsform erstreckt sich der Durchbruch 21 von der Basis des einen Zylinderwandsegments 24 bis zur Basis des anderen Zylinderwandsegments 24. Die Zylinderwandsegmente 24 sind identisch geformt und äquidistant zueinander angeordnet, so dass die Länge des Kreisbogens zwischen zwei Zylinderwandsegmenten 24 gleich der Länge einer Oberkante eines Zylinderwandsegments 24 ist. In der dargestellten Ausführungsform hat die Oberkante der Zylinderwandsegmente 24 die gleiche Länge wie ihre Unterkante. In anderen Ausführungsformen ist die Länge der Oberkante der Zylinderwandsegmente 24 kleiner als die Länge der Unterkante, d. h., die Zylinderwandsegmente 24 verjüngen sich nach oben.

Jeweils zwischen zwei Zylinderwandsegmenten 24 befindet sich eine erste Aussparung 25 in der Basisplatte 22; und jedes der Zylinderwandsegmente 24 weist auf seiner Oberkante eine Rastnase 26 auf. Die Rastnase 26 ist dafür eingerichtet, in eine korrespondierende erste Aussparung 25 eines zweiten identischen Bauteils 10 einzugreifen, wenn dieses auf das Bauteil 10 aufgesteckt wird, um die beiden Bauteile 10 miteinander zu verrasten. Die Lücken zwischen den Zylinderwandsegmenten 24 beider Bauteile 10 werden dabei von den Zylinderwandsegmenten 24 des jeweils anderen Bauteils 10 ausgefüllt, so dass ein geschlossener Hohlzylinder ausgebildet wird.

Auf der Rückseite jedes Zylinderwandsegments 24 befindet sich eine zweite Aussparung 29 in der Basisplatte 22. Die Aussparung 29 erleichtert die Herstellung des Bauteils 10 im Spritzgussverfahren durch Vermeidung von Hinterschnitten, die zusätzliche Schieber im Spritzgusswerkzeug erforderlich machen. Das Bauteil könnte aber durchaus auch ohne die Aussparungen 29 hergestellt werden.

Auf der Oberseite der Basisplatte 22 ist an der dem Durchbruch 21 zugewandten Seite jedes der Zylinderwandsegmente 24 jeweils ein Federelement 23 angeordnet. Die Federelemente 23 sind dafür eingerichtet, bei Einbringen eines Gewindebolzens 300 in den Durchbruch 21 in Gewindeflanken des Gewindebolzens 300 einzugreifen. Die dargestellte Ausführungsform weist zwei Federelemente 23 auf, die auf einander gegenüberliegenden Seiten des Durchbruchs 21 angebracht sind. In der dargestellten Ausführungsform sind die Federelemente oberhalb des Durchbruchs 21 angeordnet.

In der dargestellten Ausführungsform sind auf der Oberseite der Basisplatte 22 am Rand des Durchbruchs 21 Zentrierelemente 27 zwischen den Federelementen 23 angeordnet. Diese führen einen Gewindebolzen 300, der durch eine zentrale Öffnung 21 der Bauteile 10 in das Entkopplungselement 100 eintritt und verhindern, dass er sich in dem Entkopplungselement 100 verhakt.

Auf der Oberseite der Basisplatte 22 der Trägerstruktur 20 befindet sich eine Entkopplungsstruktur 30 aus einem Elastomeren. Die Entkopplungsstruktur 30 umschließt die zu dem Zentrum des Durchbruchs 21 koaxiale Kreislinie, ist also rund um die Zylinderwandsegmente 24 auf deren Rückseite angeordnet. In der dargestellten Ausführungsform weist die Entkopplungsstruktur 30 Stützelemente 31 auf, welche die Rückseite der Zylinderwandsegmente 24 zusätzlich abstützen. In der dargestellten Ausführungsform weist die Entkopplungsstruktur 30 radial verlaufende Nasen 32 auf. Dadurch ergibt sich ein wellenförmiges Profil bzw. ein Zickzackprofil der Oberfläche der Entkopplungsstruktur 30.

In der dargestellten Ausführungsform ist das Bauteil 10 spiegelsymmetrisch aufgebaut, wobei die Symmetrieebene durch die Hochachse (Z-Achse) des Bauteils 10 verläuft.

Figur 2 zeigt eine Ansicht von unten einer Ausführungsform der Trägerstruktur 20 des erfindungsgemäßen Bauteils 10.

Die Trägerstruktur 20 umfasst eine Basisplatte 22 mit einem zentralen Durchbruch 21. In der dargestellten Ausführungsform ist die Basisplatte 22 rund und der zentrale Durchbruch 21 ist eine längliche Öffnung mit kreisförmigem Mittelteil.

In der Ansicht von unten sind die Federelemente 23 und die Rastnasen 26, die an den in dieser Darstellung nicht sichtbaren Zylinderwandsegmenten 24 angeordnet sind und sich oberhalb der Ebene der Basisplatte 22 befinden, gut zu erkennen, ebenfalls die ersten Aussparungen 25 und die zweiten Aussparungen 29 in der Basisplatte 22. Auf der Unterseite der Basisplatte 22 sind Versteifungsrippen 28 angeordnet, welche die Steifigkeit der Trägerstruktur 20 erhöhen.

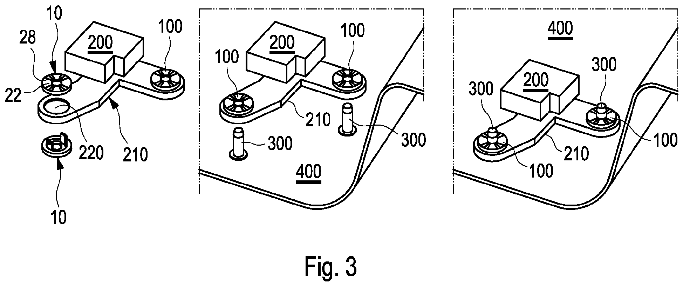

Figur 3 zeigt Arbeitsschritte des erfindungsgemäßen Verfahrens zur Schwingungsentkopplung einer Baugruppe 200 von einer Karosseriestruktur 400 in einem Kraftfahrzeug.

In der linken Abbildung ist ein Anbauteil 200 dargestellt, das auf einem Halter 210 mit Aussparungen 220 befestigt ist. Jeweils zwei identische erfindungsgemäße Bauteile 10 werden von entgegengesetzten Seiten durch die Aussparungen 220 des Halters 210 gesteckt und miteinander verrastet, um Entkopplungselemente 100 zu bilden. In der Darstellung sind auch Versteifungsrippen 28 auf der Unterseite der Basisplatte 22 des Bauteils 10 erkennbar.

Die mittlere Abbildung zeigt die Montage der Baugruppe 200 an einer Karosseriestruktur 400 eines Kraftfahrzeugs. Dazu wird die Baugruppe 200 einfach auf Gewindebolzen 300 gesteckt, die an der Karosseriestruktur 400 angebracht sind. Die in den Entkopplungselementen 100 enthaltenen Federelemente 23 greifen dabei in Gewindeflanken der Gewindebolzen 300 ein und fixieren dadurch die Baugruppe 200 auf den Gewindebolzen 300, ohne zusätzliche Bauteile oder weitere Arbeitsschritte.

Die rechte Abbildung zeigt das Ergebnis des Montagevorgangs.

Die Karosseriestruktur 400, an der der Gewindebolzen 300 montiert ist, kann beispielsweise Teil eines Motorraums oder einer Technikmulde eines Fahrzeugs sein. Beispielsweise kann mit den erfindungsgemäßen Bauteilen 10 in der Technikmulde ein Ventil auf einem Halter 210 befestigt werden, um z. B. ein Steuergerät zu kühlen.

### Bezugszeichenliste

- 10: Bauteil
- 20: Trägerstruktur
- 21: Durchbruch
- 22: Basisplatte
- 23: Federelement
- 24: Zylinderwandsegment
- 25: erste Aussparung
- 26: Rastnase
- 27: Zentrierelement
- 28: Versteifungsrippen
- 29: zweite Aussparung
- 30: Entkopplungsstruktur
- 31: Stützelement
- 32: Nase
- 100: Entkopplungselement
- 200: Baugruppe
- 210: Halter
- 220: Aussparung
- 300: Gewindebolzen
- 400: Karosseriestruktur

## Patentansprüche

1. Bauteil (10), welches dafür eingerichtet ist, mit einem zweiten identischen Bauteil (10) zusammengefügt zu werden, um ein Entkopplungselement (100) für ein mit einer Karosseriestruktur (400) eines Kraftfahrzeugs verbundenes Anbauteil (200) zu bilden, umfassend
eine Trägerstruktur (20) aus einem Thermoplasten mit
i) einer einen zentralen Durchbruch (21) aufweisenden Basisplatte (22),
ii) mindestens zwei auf der Oberseite der Basisplatte (22) auf einer zu dem Zentrum des Durchbruchs (21) koaxialen Kreislinie äquidistant zueinander angeordneten identisch geformten Zylinderwandsegmenten (24), deren dem Durchbruch (21) zugewandte Seite mindestens ein Federelement (23) aufweist, welches dafür eingerichtet ist, bei Einbringen eines Gewindebolzens (300) in den Durchbruch (21) in Gewindeflanken des Gewindebolzens (300) einzugreifen,
wobei die Länge des Kreisbogens zwischen zwei Zylinderwandsegmenten (24) mindestens so groß wie die Länge einer Oberkante eines Zylinderwandsegments (24) ist, und
wobei jedes der Zylinderwandsegmente (24) auf seiner Oberkante eine Rastnase (26) aufweist, welche dafür eingerichtet ist, in eine korrespondierende Aussparung (25) des zweiten identischen Bauteils (10) einzugreifen und die beiden Bauteile (10) miteinander zu verrasten, und
iii) jeweils zwischen zwei Zylinderwandsegmenten (24) angeordneten Aussparungen (25), sowie
eine Entkopplungsstruktur (30) aus einem Elastomeren, welche auf der Oberseite der Basisplatte (22) der Trägerstruktur (20) die zu dem Durchbruch (21) koaxiale Kreislinie umschließt.

2. Bauteil (10) nach Anspruch 1, welches mehr als zwei Zylinderwandsegmente (24) aufweist.

3. Bauteil (10) nach Anspruch 1 oder 2, welches am Rand des Durchbruchs (21) angeordnete Zentrierelemente (27) zwischen den äquidistant angeordneten Zylinderwandsegmenten (24) aufweist.

4. Bauteil (10) nach einem der Ansprüche 1 bis 3, worin die Entkopplungsstruktur (30) eine von dem Durchbruch (21) abgewandte Seite der Zylinderwandsegmente (24) abstützende Stützelemente (31) aufweist.

5. Bauteil (10) nach einem der Ansprüche 1 bis 4, worin die Entkopplungsstruktur (30) auf ihrer Oberseite radial verlaufende Nasen (32) aufweist.

6. Bauteil (10) nach einem der Ansprüche 1 bis 5, worin der Thermoplast ein gegebenenfalls mit Glasfasern verstärktes Polyamid (PA), Polyamid 6 (PA6) oder Polyamid 66 (PA66) ist.

7. Bauteil (10) nach einem der Ansprüche 1 bis 6, worin das Elastomer ein Ethylen-Propylen-Dien-Kautschuk (EPDM), ein thermoplastisches Elastomer (TPE) oder ein vernetztes thermoplastisches Elastomer auf Olefinbasis (TPV) ist.

8. Bauteil (10) nach einem der voranstehenden Ansprüche, welches durch ein 2K-Spritzgussverfahren hergestellt ist.

9. Entkopplungselement (100) für ein Anbauteil (200) an einer Karosseriestruktur (400) eines Kraftfahrzeugs, welches zwei identische Bauteile (10) nach einem der voranstehenden Ansprüche umfasst.

10. Verfahren zur Schwingungsentkopplung eines Anbauteils (200) an einer Karosseriestruktur (400) eines Kraftfahrzeugs, bei dem zwei Bauteile (10) nach einem der Ansprüche 1 bis 8 von gegenüberliegenden Seiten durch eine Aussparung (220) eines Halters (210) des Anbauteils (200) gesteckt und unter Bildung eines Entkopplungselements (100) miteinander verrastet werden, und anschließend das Entkopplungselement (100) auf einen an einer Karosseriestruktur (400) des Kraftfahrzeugs angebrachten Gewindebolzen (300) aufgesteckt wird, wodurch Federelemente (23) des Entkopplungselements (100) in Gewindeflanken des Gewindebolzens (300) eingreifen und das Entkopplungselement (100) fixieren.
